# EUROPEAN PATENT APPLICATION

(11) **EP 2 258 211 A1**
(43) Date of publication of application: **08.12.2010**
(21) Application number: 10250812.4
(22) Date of filing: 22.04.2010
(51) Int. Cl.: A23L 1/00, A23L 1/01, A23L 1/322, A21D 13/00

(54) **System and method for preparing microwavable fried food products**

(30) Priority: 24.04.2009 US 429967
(71) Applicant: Discovery Foods, LLC, Hayward, CA 94545 (US)
(72) Inventor: Wada, Christopher Takahiro, San Ramon, CA 94582 (US)
(74) Representative: Jackson, Richard Eric

(57) **Abstract**

A microwavable fried food product is prepared that possesses the crispiness of a restaurant-quality or conventional oven-cooked fried food product without employing special packaging during the microwaving process. This is achieved through use of a process whereby the fried food product, such as an egg roll, is fried for a first time after having been coated in a batter comprising at least modified food starch. Following the first frying step, a coating comprised of at least modified food starch is applied to the food product and then fried for a second time after the food product absorbs the coating. The resultant fried food product, when microwaved, possesses the texture of the fried food after having been heated in a conventional oven. The fried food product is prepared in a microwave oven and retains the texture and crispiness of a fried food prepared in a conventional oven.

## Description

### TECHNICAL FIELD

The present invention relates to microwavable fried food products and a process for preparing the same. More particularly, the present invention relates to fried food products and a process for preparation of fried food products in a microwave oven that possess the crispiness of a restaurant-quality or conventional oven-cooked fried food product without employing special packaging during the microwaving process.

### BACKGROUND OF THE INVENTION

Egg rolls are a common food comprised of a generally cylindrical mass of an edible filler, usually vegetables, seafood and/or meat, which have been suitably flavored through the addition of salt, flavors, spices and the like. This cylindrical mass of an edible filler is wrapped completely within a single sheet of pastry material typically formed through a mixture of flour, water, salt and egg. The pastry material is typically extruded into a ribbon-like laminated dough form and is then passed through calendaring rolls to produce a continuous sheet of pastry material. The continuous sheet is then cut into squares, and the single sheets are used in the assembly of egg rolls. A single sheet of pastry material is placed on a flat surface, and a cylindrical mass of an edible filler is then placed on the single sheet. The edible filler is then rolled up inside the single sheet of pastry material. The pastry/filler combination is fried and then frozen for later consumption.

The use of microwave ovens to prepare food has become a staple appliance in many homes because of their convenience in the cooking process. Microwave ovens allow for foods to be heated more quickly than conventional ovens. However, certain foods, particularly fried foods such as egg rolls, are often difficult to heat satisfactorily in a microwave oven. Microwave ovens typically penetrate to the interior of the food and heat from the inside. As such, they have a tendency to drive moisture to the relatively cooler surface of the food. Many fried foods, such as egg rolls, are known to have a hot moist interior and a hot, crispy exterior. However, when they are cooked in a microwave oven, these fried food products have a tendency to be soggy with little surface crispness.

In the past, frozen fried food manufacturers, such as egg roll manufacturers, would not recommend cooking frozen fried food products in a microwave oven because of the poor texture of the food product that results from having been heated in a microwave oven. To address these issues with microwaving certain frozen fried foods, manufacturers have provided packaging materials, such as a vented tray or a sleeve, to be used to protect the food during the microwaving process and to assist in achieving the texture of the product similar to when it is cooked in a conventional oven. These packaging materials have been specially adapted for use in microwave cooking and may incorporate a material able to absorb the electric portion of the microwave field energy to convert the energy into heat. However, use these packaging materials in order to microwave food tends to subtract from the convenience of the microwaving process. The use of these packaging materials adds another step to the cooking process, either forcing the consumer to package the food appropriately prior to microwaving or requiring the consumer to remove the food from the special packaging after microwaving. Moreover, use of these packaging materials in the microwaving process still tends not to produce a fried food product that possesses the crispiness of a restaurant-quality or conventional oven-cooked fried food, such as an egg roll.

### BRIEF SUMMARY OF THE INVENTION

The present invention is directed to a process for preparing fried food products for heating in a microwave oven so that the fried food product possesses the crispiness of a conventional oven-cooked fried food product without employing special packaging during the microwaving process.

Another embodiment of the present invention is directed to a method for preparing a fried food product that is crispy upon microwaving. A batter is prepared comprising at least modified food starch. The batter also preferably includes xanthan gum or another emulsifier-type ingredient. The batter is preferably prepared by metering water into a tank, blending dry ingredients with water to form a mixture, and blending oil in the mixture of dry ingredients and water to form the batter. The dry ingredients may preferably include flour, modified food starch, sugar, egg powder, salt and xanthan gum. Modified food starch preferably comprises 1 to 4% of the batter. The batter also may be filtered according to embodiments of the present invention. The batter is then fried. This fry step may preferably be performed in a submersible fryer. A coating comprising at least modified food starch is applied to the fried batter. The coating preferably includes water, modified food starch, flavors, salt and autolyzed yeast. Modified food starch preferably comprises 4 to 8% of the coating. The coated fried batter is fried a second time to form the fried food product. According to embodiments of the present invention, the second frying may be performed in a submerging bath.

A further embodiment of the present invention is directed to a fried food product that is prepared through a fry-batter-fry process. The food product is fried in a first fry step and then coated with a coating comprised of at least modified food starch. A batter may be applied to the food product prior to the first fry step according to embodiments of the present invention. This batter preferably includes at least modified food starch and xanthan gum, with modified food starch comprising 1 to 4% of the batter and xanthan gum comprising 0 to 1% of the batter. The coating is comprised of 4 to 8% modified food starch. The coated food product is fried in a second fry step before being frozen. The resultant food product, when microwaved, is crispy as if it had been cooked in a conventional oven.

An additional embodiment of the present invention is directed to a method for preparing an egg roll. The method preferably comprises preparing a batter comprising at least modified food starch, frying the batter, applying a coating comprising at least modified food starch to the fried batter to form a coated fried batter and frying the coated fried batter to form the egg roll. Modified food starch preferably comprises 1 to 4% of the batter and 4 to 8% of the coating. The batter also preferably includes xanthan gum or another emulsifier-type ingredient. The coating may also be comprised of water, egg roll batter, salt and autolyzed yeast. The egg roll batter preferably includes flours, corn starch, dextrin, oil, leavening, egg and dextrose. In other embodiments of the present invention, the method may further comprise heating the batter, applying an edible filler to the batter and enclosing the edible filler in the batter prior to frying the batter.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### DETAILED DESCRIPTION OF THE INVENTION

The desire is to achieve a microwavable fried food product, typically a frozen food, that possesses the crispiness of a restaurant-quality or conventional oven-cooked fried food product without employing special packaging during the microwaving process. This is achieved through use of a process whereby the fried food product, such as an egg roll, is fried for a first time after having been coated in a batter. Following the first frying step, the food product is placed in a coating comprised of at least modified food starch and then fried for a second time after absorbing the coating. The resultant fried food product, when microwaved, possesses at least the equivalent texture of the fried food product after having been heated in a conventional oven. Thus, an consumer may prepare a fried food product with the texture and crispiness of a fried food prepared in a conventional oven in a microwave oven in less time than it would take to cook the fried food product in a conventional oven.

According to embodiments of the present invention, in a first step of the microwavable fried food manufacturing process, water is metered into a tank or mixing kettle. Water preferably comprises 45 to 65% of the resultant batter. Dry ingredients including, but not necessarily limited to, whole grain flour, wheat flour, modified food starch, sugar, egg powder, salt and xanthan gum are preferably added to a hopper and blended together until even dispersement is achieved. Sugar, egg powder and salt preferably comprise 2 to 5% of the resultant batter. There is no preferred order in which the dry ingredients are blended together. After water has been added to the tank or mixing kettle, dry ingredients are preferably added to the water and blended through use of a high shear mixer until the dry ingredients are blended with the water. In a preferred embodiment of the invention, blending of the dry ingredients with water may be using a mixer that preferably runs at 3600 rpm to result in a batter for use in subsequent steps of the manufacturing process after approximately 3-4 minutes of mixing. It should be appreciated that the mixing times may vary depending on the type of mixer utilized. The high shear properties of the mixer aerates the batter and preferably results in a slightly porous skin/wrapper being formed upon frying the batter. This is an improvement over the prior art which typically required as much as one hour to prepare laminated dough for use in creating the skin/wrapper for egg rolls. The mixing apparatus preferably incorporates a pumping system to assist in blending the ingredients of the batter as well as an automatic timer used to time the addition of the various ingredients to be blended in forming the batter. Approximately halfway through the blending process, oil, such as vegetable oil, is preferably blended into the mixture of water and dry ingredients. Oil preferably comprises 2 to 6% of the resultant batter.

Modified food starch in combination with xanthan gum contained in the batter provide texture to the skin/wrapper that allows the fried food product to have a crispy texture upon microwaving according to embodiments of the present invention. Modified food starch preferably comprises 1 to 4% of the batter. Modified food starches, such as those employed in the preparation of the batter according to embodiments of the present invention, have previously been used in frying chicken and are preferably high amylose starches (such as waxy corn with naturally high levels of amylose). Modified high amylose starch has been shown to exhibit good film-forming characteristics in fried applications which allows it to reduce oil pick-up, thereby increasing product crispiness. If modified food starches comprise a larger percentage of the batter, the skin/wrapper formed from the batter has more of a tendency to assume a harder texture as opposed to a crispy texture upon microwaving. Xanthan gum preferably comprises up to 0.5% of the batter. Xanthan gum is preferably incorporated into the batter to enhance the modified food starch. However, it should be appreciated that other emulsifier-type ingredients that hold the ingredients well in suspension may be used in addition to or as a substitute for xanthan gum according to embodiments of the present invention. Other ingredients including flours and dextrins are preferably incorporated into the batter in order to enhance the blistered appearance of the egg roll that is formed. Flours, including, but not necessarily limited to, whole grain flour and wheat flour, preferably comprise 30 to 40% of the resultant batter. It should be appreciated that the components of the batter may differ depending on the resultant fried food product desired; however, the batter preferably includes at least modified food starch and an emulsifier-type ingredient, such as xanthan gum.

In a further step according to embodiments of the present invention, the resultant batter preferably undergoes a filtration process so as to remove any masses in the batter that might alter the texture of the resultant skin/wrapper of the food product. The batter is preferably passed through a mechanical filter and/or mesh screen. The batter is then preferably pumped into a batter tray, and the batter is preferably applied to a batter applicator containing a stamp die. The stamp die preferably has a porous structure, and each stamp die has a uniform structure so as to allow the thickness of the pancakes to be controlled. The batter formed according to embodiments of the present invention is preferably more porous than the dough used in the past to form a skin/wrapper of an egg roll. The batter forming the skin/wrapper is preferably slightly perforated to allow better oil penetration in the frying processes. The batter applicator applies the batter to the stamp dies found on a rotating heated drum. Individual pancakes are formed on the various stamp dies of the drum as opposed to cooking a single long sheet of batter or dough as done in the past, and the pancakes are cooked on the drum until a desired texture is achieved. More specifically, the individual pancakes are preferably cooked to a point where the pancakes may be removed from the drum without tearing. Thus, it is preferable that the temperature of the drum used to cook the pancakes not be too hot so as to avoid the resultant pancakes becoming too paper-like having a tendency to tear during the later rolling and fry processes.

The drum temperature is preferably monitored and adjusted relative to the speed at which the drum is rotating. It should be appreciated that the drum can preferably move in opposite directions. However, according to embodiments of the present invention, the batter is preferably applied with the drum side on the inside. After each pancake has been cooked while rotating on the heated drum, the pancake will reach the stage where it is to be removed from the heated drum. The drum preferably incorporates a knife located proximate to the drum to assist in removal of the pancakes from the heated drum. When a pancake reaches the point on the drum where it comes in contact with the knife, the knife preferably acts to pull the pancake away from the drum. The pancake then preferably is guided by the knife until it reaches a conveyer belt where it is transported to the next stage of the process.

The conveyer belt, utilized according to embodiments of the present invention, preferably incorporates a photo eye in order to control the timing and distance between the pancakes that are formed on the drum. As each pancake pulls away from the drum and moves along the conveyer belt, an edible filler may be applied to the central portion of the pancake. The edible filler preferably comprises vegetables, meat, vegetable oil, cornstarch, flour and flavorings including, but not necessarily limited to, ginger, sesame seed oil, salt, pepper, garlic and/or sugar. The composition of the edible filler is determined based on the flavor profile desired. Moisture migrates out of the edible filler to steam the food product so it is desirable to control the moisture that escapes so as to not adversely impact the skin/wrapper texture. In order to achieve objects of the present invention, it is desirable that the filler be moisture-restricted such that the filler preferably does not impact the skin/wrapper from the inside during the frying and/or microwaving processes.

Once the edible filler is applied to a pancake, the pancake is preferably rolled up using a compression roller which automates the rolling process. The conveyer belt also preferably incorporates a device to lightly spray the rolled-up pancakes with water so as to discourage the pancakes from unwinding when later placed in the fryer. The water spray works in conjunction with a compression roller so that the water spray preferably adheres to the pancake to prevent the pancake from unrolling during the frying processes, which will be described in more detail below.

When the pancake containing the edible filler is rolled and sealed, the roll is preferably ready to enter the first frying step. According to embodiments of the present invention, a submersible fryer is preferably used. The conveyer belt moves the roll into the fryer, and a second belt, sometimes referred to as a hold-down belt, preferably may be employed to maintain the roll under the surface of the oil in order to minimize the possibility of the roll floating around in the oil. It should be appreciated that other frying mechanisms may be used to complete the first frying step without departing from the objects of the present invention.

It should be appreciated that, in the past, manufacturers of fried food products, such as egg rolls, only employed a single frying step, similar to the first frying step described above. However, according to embodiments of the present invention, a second frying step is preferably employed following an intermediate step whereby a coating is applied to the food product to assist in the second frying step.

In an intermediate step between the two frying steps according to embodiments of the present invention, a coating is applied to the first-fried food product after the food product moves along the conveyer belt to allow any excess oil from the first frying step to dry off the food product. The coating preferably includes at least a modified food starch. Again, the inclusion of a modified high amylose food starch in the coating, similar to its addition to the batter as previously described, gives improved structure and texture to the coating. Starches from a corn source are most common and preferable, but other starch sources, such as potato starch, may also be appropriate for use according to embodiments of the present invention. It should be appreciated, however, that the modified food starch utilized in the coating is typically of the same type as employed as part of the original batter forming the food product.

Should an egg roll be the desired fried food product, the coating preferably incorporates an egg roll batter incorporating additional starches and flours. The egg roll batter is typically comprised of 50 to 65% wheat flour, 20 to 30% cornstarch, 5 to 10% dextrin, 0 to 5% soybean oil, 0 to 3% leavening, 0 to 3% whole eggs, 0 to 1% dextrose and 0 to 1% malted barley flour. It should be appreciated that the percentages of the ingredients comprising the egg roll batter may vary depending on the texture of the resultant product desired. While wheat flour and malted barley flour are incorporated as part of the egg roll batter, it also should be appreciated that other flours may be substituted without departing from the objects of the present invention. However, wheat flour is preferable due to its high gluten level which, when developed, gives it strength and elasticity which is well-suited to this application. Potato starch also may be incorporated into the egg roll batter as well as corn starch according to embodiments of the present invention.

In addition to modified food starch, other components of the coating according to embodiments of the present invention preferably include water, flavorings, salt and autolyzed yeast. Water preferably comprises 50 to 70% of the coating. The amount of water contained in the coating is important to the application of the coating to the food product as the amount of water incorporated in the coating relative to the other ingredients will determine the thickness of the resultant coating. If the coating is too thick, the look and texture of the food product changes, and the thickness may present a challenge to frying and microwaving the resultant food product. The egg roll batter, should an egg roll product be formed, preferably comprises 25 to 45% of the coating but can range depending on the percentage of water comprising the coating. Modified food starch preferably comprises 4 to 8% of the coating while the combination of flavorings, salt and autolyzed yeast comprise 0 to 5% of the coating.

The coating applied to the food product following a first frying step is preferably prepared utilizing a high shear mixer. Similar to the preparation of the batter described above, water is preferably metered into the tank followed by the dry ingredients, including flavorings, if desired. Flavorings employed may depend on the type of food product being prepared and are typically added to the coating for flavor delivery but do not significantly impact the functionality of the coating according to embodiments of the present invention. For example, chicken flavorings may be desired if a chicken egg roll is being prepared. However, incorporation of flavorings into the coating is not required to accomplish the objects of the present invention. Further, it should be appreciated that flavorings may be added following addition of other dry ingredients if preferred. The egg roll batter, if utilized, and modified food starch are then preferably added to the mixer, and the components are mixed until even dispersement is achieved.

The ingredients forming the coating are preferably mixed at a lower speed for a longer period of time than speed used in preparing the batter. This is due to the fact that less aeration is typically desired in the coating as compared to the batter. However, it should be appreciated that, the time and speed required for preparing the coating may vary depending on the mixing apparatus employed. When even dispersement of the ingredients forming the coating has been achieved, the coating is transferred to a tank where the food products are submerged and coating is applied while the food products move along a conveyer belt.

Following application of the coating, according to embodiments of the present invention, a second fry step is employed to set the coating that has been applied to the food products. A submerging bath in conjunction with a waterfall are preferably employed in the second fry process. The fryer employed in this process preferably has a deep oil well, and the food product is dropped into the deep oil well while the food products continue to move on a conveyer belt. This deep oil well is typically at least double the depth of the fryer employed in the first fry step. The oil employed in this second fry step is typically heated to a higher temperature than the oil employed in the first fry step, and thus, the food product preferably can move faster through the second fry step as it is fried faster. For example, the food product may be fried in the first fry step for approximately three minutes while the food product may only require frying in the second fry step for approximately 45-60 seconds when the oil is heated to a temperature that is approximately 10 degrees higher than the oil employed in the first fry step. However, it should be understood that the time needed for frying in the first and second fry steps may vary depending on the frying mechanism used as well as the thickness of the batter and/or coating applied to the food product.

The fryer employed in the second fry step preferably incorporates oil jets mounted on a spray bar within the fryer that move the food product along the conveyer belt after the food product is placed into the deep oil well. Use of these oil jets preferably avoids or reduces the possibility of pile up of the food product within the fryer. Use of oil jets allows for easier movement of the food product along the conveyer belt without having the individual food products touch each other and also reduces the likelihood of the food product adhering to the belt. While an embodiment of the second fry step has been disclosed, it should be appreciated that other mechanisms for frying may be employed in the second fry step without departing from the objects of the present invention.

At the conclusion of the second fry step, the fried food product is preferably transferred using a conveyer belt to a flash freezer. The fried food product remains in the flash freezer for a period of time so as to allow the fried food product to freeze for packaging and shipping to the end user.

When the end user or consumer microwaves the fried food product, the fried food product, according to embodiments of the present invention, is crispy and has the texture of a conventional oven-prepared fried food product in approximately two minutes. Moreover, the fried food product attains this texture and oven-prepared quality even when the product is heated within the carton in which the product was shipped or on a plate or paper towel. It should be appreciated that if the fried food product is microwaved within the shipping carton, the carton should be partially open to allow air flow through the carton during the microwaving process.

In one embodiment of the present invention, a chicken egg roll is prepared. The chicken egg roll preferably is comprised of approximately 57% edible filler and 43% batter. The filler for a chicken egg roll according to embodiments of the present invention preferably includes chicken, cabbage, carrots, soy concentrate, vegetable oil, salt, green onion, cornstarch, minced ginger, whole grain flour, sesame seed oil, black pepper, flavoring, garlic and sugar with chicken, cabbage and carrots preferably comprising 70 to 80% of the composition of the edible filler. It should be appreciated however that the composition of the filler does not vary the microwaving qualities of the resultant egg roll. The liquid nature of the filler however must be controlled in order to avoid imparting too much moisture to the skin/wrapper during the frying and microwaving processes.

According to embodiments of the present invention, the batter for the chicken egg roll preferably is comprised of 50 to 60% water, 20 to 30% whole grain flour, 10 to 15% wheat flour, 2 to 4% vegetable oil, 1 to 2% modified food starch, 1 to 2% sugar, 1 to 2% egg powder and less than 1% salt and emulsifier, such as xanthan gum.

In this embodiment, the coating applied to the first-fried food product is approximately 55% water and 35% egg roll batter ± 10% which will change the texture and consistency of the product. Wheat flour preferably comprises 50 to 60% of the resultant egg roll batter. Cornstarch comprises 20 to 30% of the resultant batter. Dextrin comprises 7 to 9% of the resultant batter. Soybean oil comprises 2 to 4% of the resultant batter. Leavening comprises 1 to 3% of the resultant batter. Whole eggs comprise 1 to 2% of the resultant batter. Dextrose comprises 1% of the resultant batter, and malted barley flour comprises less than 1% (approximately 0.8%) of the resultant batter.

After completion of the second fry process, the coating applied to the food product comprises approximately 5 to 10% of the resultant food product while the first-fried egg roll comprises 90 to 95% of the resultant egg roll.

While embodiments of the invention have been described above with respect to preparation of an egg roll product, it should be appreciated that other fried food products may be prepared utilizing the fry-batter-fry process set forth above. More specifically, a fried food product may be prepared through application of a batter incorporating at least modified food starch and an emulsifier-type ingredient, such as xanthan gum, prior to the first fry step followed by an intermediate step of applying a coating incorporating at least modified food starch to the food product and then a second fry step.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method for preparing a fried food product for heating in a microwave, said method comprising:
preparing a batter comprising at least modified food starch;
frying said batter;
applying a coating comprising at least modified food starch to said fried batter to form a coated fried batter; and
frying said coated fried batter to form said fried food product.

2. The method of claim 1, said step of preparing a batter comprising:
metering water into a tank;
blending dry ingredients with said water to form a mixture; and
blending oil into said mixture of dry ingredients and said water to form said batter.

3. The method of claim 2, said dry ingredients comprising:
flour, modified food starch, sugar, egg powder, salt and xanthan gum.

4. The method of claim 2 or claim 3, said method further comprising:
filtering said batter.

5. The method of any preceding claim, wherein frying said batter is performed in a submersible fryer.

6. The method of any preceding claim, said coating comprising:
water, modified food starch, flavors, salt and autolyzed yeast.

7. The method of any preceding claim, wherein frying said coated batter is performed in a submerging bath.

8. A fried food product, said product prepared through a method comprising:
frying said food product in a first fry step;
coating said food product with a coating comprising at least modified food starch;
and
frying said coated food product in a second fry step.

9. The frozen food product of claim 8, said method further comprising:
applying a batter to said food product prior to said first fry step.

10. The frozen food product of claim 9, said batter comprising modified food starch and xanthan gum.

11. The frozen food product of claim 10, said modified food starch comprising 1 to 4% of said batter and said xanthan gum comprising 0 to 1% of said batter.

12. A method for preparing an egg roll, said method comprising:
preparing a batter comprising at least modified food starch;
frying said batter;
applying a coating comprising at least modified food starch to said fried batter to form a coated fried batter; and
frying said coated fried batter to form said egg roll.

13. The method of claim 12, said coating further comprising:
water, egg roll batter, salt and autolyzed yeast.

14. The method of claim 13, said egg roll batter comprising:
flours, corn starch, dextrin, oil, leavening, egg and dextrose.

15. The method of claim 12 or claim 13, said method further comprising:
heating said batter;
applying an edible filler to said batter; and
enclosing said edible filler in said batter prior to frying said batter.
